# EUROPEAN PATENT SPECIFICATION

(11) **EP 1 176 872 B1**
(45) Date of publication and mention of the grant of the patent: **25.08.2004**
(21) Application number: 99959607.5
(22) Date of filing: 10.12.1999
(51) Int. Cl.: A23C 9/12

(54) **PRODUCTION OF STIRRED FERMENTED MILK PRODUCTS**
VERFAHREN ZUR HERSTELLUNG VON GERÜHRTEN SAUERMILCHPRODUKTEN
PRODUCTION DE PRODUITS LAITIERS BRASSES ET FERMENTES

(30) Priority: 07.05.1999 HR 990136
(43) Date of publication of application: 06.02.2002
(73) Proprietor: Cindric, Marin, 47000 Karlovac (HR)
(72) Inventor: Cindric, Marin, 47000 Karlovac (HR)
(74) Representative: Gesthuysen, von Rohr & Eggert
(86) International application number: PCT/HR1999/000031
(87) International publication number: WO 2000/067584

(56) References cited:
- EP-A- 0 322 010

## Description

### Technical Field

This invention refers to the production of stirred fermented milk products. According to the International Patent Classification it has been classified as: A 23 C, 9/00.

Any former procedures applied in the production of stirred fermented milk products use a single fermenter in which a certain fermentation process takes place.

This is the reason why there are no stirred fermented milk products in the market, which are a mixture of several different products - different in the sense that each respective product is fully defined by the fermenting microorganisms, and produced under different fermentation conditions.

### Background Art

A typical technological procedure applied in the production of stirred fermented milk products includes the following steps:

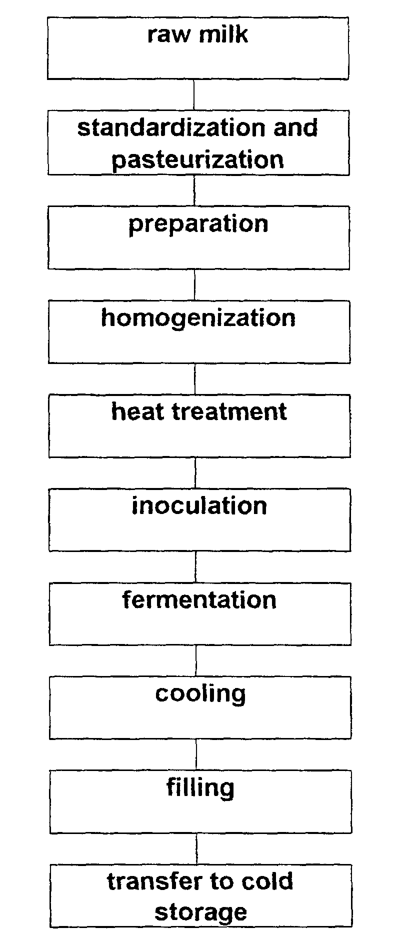

The most important step in the process, the milk fermentation itself, occurs in one fermenter, i.e. in one vessel only.

The assumption is that this is the only possible way, and all the installations intended for such production are designed accordingly.

Producers of dairy cultures discover and introduce more and more new lactic acid bacteria and combine them to design new dairy cultures for new products.

New dairy cultures consist of several lactic acid bacteria species as well as other microorganisms.

All these cultures grow and ferment in the same fermenter.

The correlations among the populations of individual species within such a complex live system determine the characteristics of the end product.

Individual microbe species making the components of dairy cultures are not, in most cases, in symbiotic relations.

Their respective optimum growths take place at different temperatures, they prefer different enrichment substances, each of them has a different fermentation time, and reacts differently to oxygen from the air.

Typical such examples are mesophilic and thermophilic lactic acid bacteria.

Mesophilic bacteria ferment at 26°C for 12-16 hours (sour milk), and thermophilic bacteria ferment at 43°C for 3-5 hours (yoghurt).

It is clear that there can be no fermentation of mesophilic and thermophilic bacteria in the same fermenter, at the same time.

In order to overcome this problem and create a product incorporating the best features of both the mesophilic and thermophilic fermentation, a completely different approach is required.

The closest background art relevant to the background art mentioned above, is disclosed in the Document EP 0 322 010 A (STICHTING NL I ZUIVELONDERZOEK) 28 June 1989 (1989-06-28).

### Disclosure of the invention

The new procedure rests on essentially different grounds.

The technological process is designed completely in accordance with the requirements of working microorganisms, i. e. subjects of fermentation.

A subject of fermentation may be the following:
a) one species of microorganisms
b) a group of different but compatible microorganisms
c) a symbiotic union of microorganisms

The attention is focused on the subject of fermentation itself, because it is to determine all the qualities of the end product.

Everything is subordinated to their requirements, and according to those requirements all the process parameters are set, and optimal conditions for their growth and fermentation are determined.

Therefore, instead of one fermenter containing a mixture of microorganisms a desired number of parallely connected fermenters is installed, each to contain one of the subjects of fermentation to be used.

The number of fermenters in a plant depends on the number of different fermentations involved in making a product.

Each fermenter is anticipated for one optimal process of fermentation.

Therefore it is necessary to design the process and the plant in such a way that they should fulfill the goals set.

This implies:
1. a joint and flexible preparation of milk
2. a joint and flexible heat treatment of milk
3. certain number of parallelly placed fermenters with cooling and agitation equipment
4. buffer tanks for finished product
5. filling of the finished product
6. transfer to a cold storage

The technological process for the production of stirred fermented milk products with the new procedure applied is presented below:

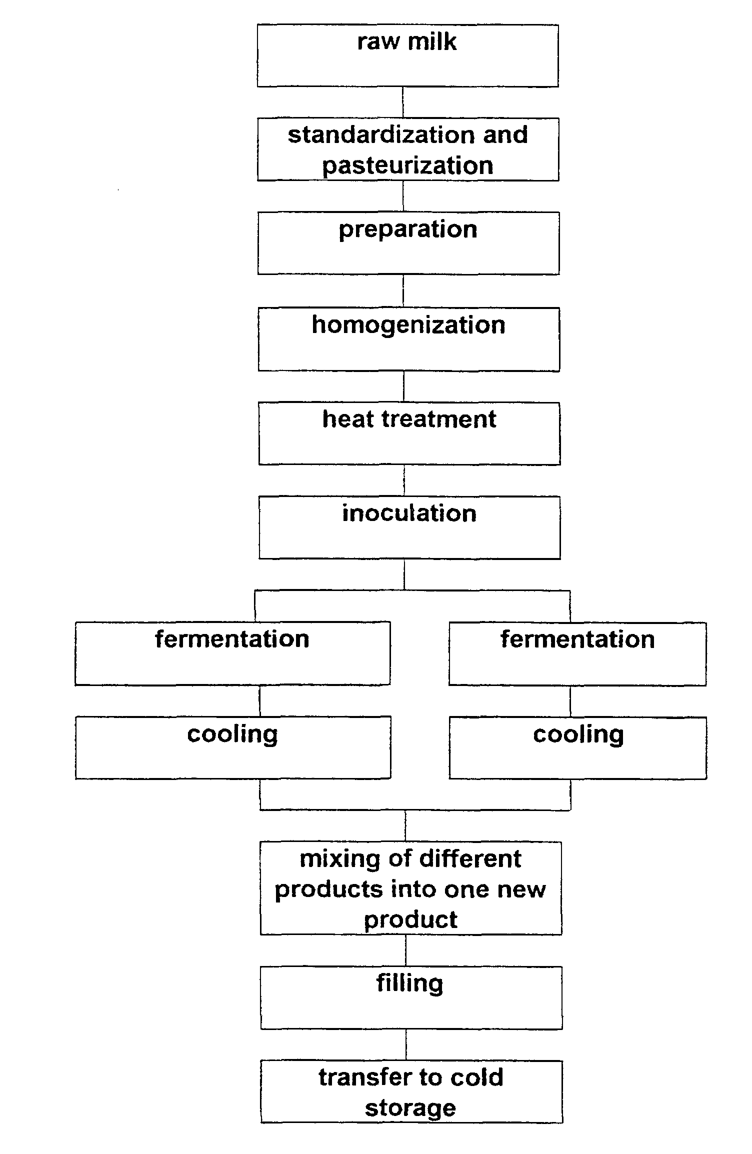

Raw milk of approved quality is standardized to a fat content of 3.2%, pasteurized by standard procedure and transferred to a tank.

A defined quantity of milk protein isolate is added to prevent syneresis.

The milk is then homogenized at 55°C and 150 bar, and heat-treated at 95°C for 5-8 minutes.

After that the milk is cooled to 26°C and transferred to the fermenter N° 1, and inoculated with a mesophilic culture.

Milk intended for yoghurt production is heat-treated in the same manner, cooled to 43°C transferred to the fermenter N° 2 and inoculated with a yoghurt culture.

The procedures are timed so as to allow both products to be finished at the same time.

When the fermentation has been completed, in the fermenter N° 1 there is sour milk, and in the fermenter N° 2 there is yoghurt.

Both products should be agitated while cooling to 20°C.

The sour milk and yoghurt are then both fed into a tank by means of a positive-displacement or Mohno pump, and agitated into a homogenous mixture of a liquid consistency.

The mixture of sour milk and yoghurt, making a new product, are then filled into appropriate packages and transferred to a cold storage.

This invention allows production of almost an infinite number of fermented milk products resulting from previously incompatible fermentation processes.

Probiotic bacteria require very specific and rigid conditions and the resulting products do not normally have a pleasant taste.

The new procedure overcomes this problem allowing the production of high-quality probiotics by creating a mixture of two or more products, in which a fine taste of classic fermented varieties will prevail.

The new procedure opens new, practically unlimited possibilities to create stirred fermented milk products.

## Claims

1. Procedure for the production of stirred and drinking fermented milk products, **characterized by** the production of two or more individual different products made in a set of parallelly arranged fermenters, cooled and mixed in a desired proportion to make a new product.

## Patentansprüche

1. Verfahren zur Herstellung von gerührten und fermentierten Trinkmilchprodukten, **gekennzeichnet durch** die Herstellung von zwei oder mehreren unterschiedlichen Einzelprodukten, die in einer Einheit bzw. Anlage von parallel angeordneten Fermentiereinrichtungen erzeugt werden und gekühlt und in einem gewünschten Verhältnis zur Herstellung eines neuen Produktes gemischt werden.

## Revendications

1. Procédé de préparer des produits laitiers potables brassés et fermentés, characterisé par la production de deux ou plusieurs produits individuels et différents, lesdits produits étant faits dans une unité ou dans un set de fermentateurs qui sont arrangés parallèlement, et étant réfrigés et mélangés dans une proportion désirée pour faire un produit nouveau.
